# EUROPÄISCHE PATENTANMELDUNG

(11) **EP 1 520 841 A1**
(43) Veröffentlichungstag der Anmeldung: **06.04.2005**
(21) Anmeldenummer: 04022504.7
(22) Anmeldetag: 22.09.2004
(51) Int. Cl.: C03C 10/02, C03C 10/08

(54) **Glaskeramik und Verfahren zur Herstellung einer solchen**

(30) Priorität: 30.09.2003 DE 10346197
(71) Anmelder: Schott AG, 55122 Mainz (DE)
(72) Erfinder: Zachau, Thilo, 68642 Bürstadt-Riedrode (DE); Liebald, Rainer, 64569 Nauheim (DE); Sprenger, Dirk, 55271 Stadecken-Elsheim (DE); Schneider, Meike, 65232 Taunusstein (DE)
(74) Vertreter: Gahlert, Stefan, Dr.-Ing.

(57) **Zusammenfassung**

Eine Glaskeramik enthält folgende Bestandteile (in Gew.-% auf Oxidbasis): SiO₂ 35 bis 60, B₂O₃ >4 bis 10, P₂O₅ 0 bis 10, Al₂O₃ 16,5 bis 40, TiO₂ 1 bis 10, Ta₂O₅ 0 bis 8, Y₂O₃ 0 bis 6, ZrO₂ 1 bis 10, MgO 6 bis 20, CaO 0 bis 10, SrO 0 bis 4, BaO 0 bis 8, ZnO 0 bis 4, SnO₂ + CeO₂ 0 bis 4, SO₄²⁻ + Cl⁻ 0 bis 4, wobei der Summengehalt (SnO₂ + CeO₂ + SO₄²⁻ + Cl⁻) zwischen 0,01 und 4 Gew.-% liegt. Die Glaskeramik kann im Floatglasverfahren verarbeitet werden, kann transparent ausgeführt werden und eignet sich u.a. als Substrat für Dünnschicht-Halbleiter, insbesondere Dünnschicht-Silizium, für Display-Anwendungen, Solarzellen und dergleichen.

## Beschreibung

Die Erfindung betrifft eine Glaskeramik, die insbesondere als relativ dünnes Substrat bei vielfältigen Anwendungen zum Einsatz kommen kann. Hierzu zählen unter anderem ein Einsatz als Substrat für Dünnschicht-Halbleiter, insbesondere Dünnschicht-Silizium, sowie als Substrat für Display-Anwendungen (Thin Film Transistor TFT Display Substrate; Backplate, transparentes Frontplate etc.), als Solarzellen und dergleichen, sowie als Festplattensubstrat.

Im Stand der Technik sind alkalifreie Glaskeramiken im Grundglassystem MgO-Al₂O₃-SiO₂ (MAS-System) mit diversen Zusätzen an Glasbildnern, Netzwerkwandlern, Zwischenoxiden, Keimbildnern und Flussmitteln bekannt, die durch Temperung entsprechender Ausgangsgläser gewonnen werden und dabei in Materialien mit homogen verteilten Kristalliten in einer Restglasphase überführt werden.

In diesem Zusammenhang sind insbesondere zahlreiche MAS-Glaskeramiken für den Einsatz als Substrate für Festplattenspeicher bekannt. Hierzu sind etwa die US-B-6,583,077, die US-A-5,968,857, die US-B-6,569,791, die US-B-6,458,730, die US-6,458,729, die US-B-6,495,480, die US-A-5,491,116 die EP-A-1 067 101, die EP-A-0 941 973, die EP-0 939 396 und die EP-0 939 395 zu nennen.

Die betreffenden Glaskeramiksubstrate enthalten teilweise Zusätze von TiO₂, P₂O₅, ZrO₂ als Keimbildner für die Kristallisation in bestimmten Mengen. Ferner können Erdalkalioxide in bestimmten Mengen zugesetzt sein. Als Läutermittel werden hierbei in der Regel Sb₂O₃, As₂O₃ oder SnO₂ verwendet. Teilweise sind hierbei auch Zusätze von Boroxid (B₂O₃) von bis zu 4 Gew.-% vorgesehen (vgl. EP-A-0 939 396 und EP-A-0 939 395). Eine ganze Reine von Glaskeramiken mit bestimmten Zusammensetzungsbereichen für diesen Anwendungszweck ist auch aus der EP-A-0 941 973 bekannt. Diese Glaskeramiken sind allerdings frei von Boroxid. Als Läutermittel werden wiederum CeO₂, As₂O₃ oder Sb₂O₃ verwendet.

Darüber hinaus sind auch verschiedene MAS-Glaskeramiken zu nennen, die in Verbindung mit optischen Anzeigen, wie etwa LCDs, verwendet werden (vgl. z.B. US-B-6,197,429. Die Erzielung der hierzu notwendigen Transparenz im sichtbaren Bereich des elektromagnetischen Spektrums (380 bis 780 nm) lässt sich hierbei bekanntlich erreichen, indem die Keramisierung so gesteuert wird, dass die Kristallitgrößen signifikant kleiner sind als die Wellenlänge des entsprechenden Lichtes (also kleiner etwa 300 nm), denn dann tritt an den Kristalliten keine Lichtstreuung auf. (Vgl. Beall und Pinckney: "Nanophase Glass-Ceramics" J.Am.Ceram.Soc., 82(1) [1999] 5-16.) Die Kristallitgrößen werden durch entsprechende gezielte Keimbildung und kontrolliertes Kristallwachstum angemessen klein gehalten.

Nach dem Stand der Technik sind die üblicherweise in Glaskeramiken des MAS-Systems ausgeschiedenen Kristallphasen Cordierit, Spinell, Sapphirin, Mullit, Enstatit oder Forsterit (bzw. entsprechende Mischkristalle in einer silikatischen Restglasphase). Es versteht sich, dass die Zusammensetzungen die im Stand der Technik beschriebenen Glaskeramiken über einen weiten Bereich variieren - entsprechend der Zusammensetzung der ausgeschiedenen Kristallphasen und Restglasphasen.

Für eine gleichmäßige Kristallitgrößenverteilung ausgeschiedener Kristallphasen ist eine optimal große Anzahl und optimal homogene Verteilung an Keimen notwendig, die nach dem Stand der Technik durch eine thermisch induzierte Phasenseparation im Glas mit anschließender Bildung von Nanokristalliten erzeugt werden. Zu diesem Zweck werden dem Glas sogenannte Keimbildneroxide (TiO₂, ZrO₂) einzeln oder in bestimmten Verhältnissen zugesetzt. Beim Erhitzen des Glases, üblicherweise auf Temperaturen oberhalb von T_{g}, geht man im Falle des TiO₂ im MAS-System von der Bildung von Mg-Titanat-Nanokristalliten als Keim für andere Kristallphasen aus (vgl. Golubkov et. al.: "On the phase separation and crystallization of glasses in the MgO-Al₂O₃-SiO₂-TiO₂ system", Glass Phys. Chem., 29/3 [2003] 254-266).

Soweit die Glaskeramiken als selbsttragende Substrate verwendet werden sollen, stehen Eigenschaften wie hohe Bruchfestigkeit und ein hoher spezifischer Elastizitätsmodul (spezifische Steifigkeit: E/ρ) im Vordergrund. Je nach der Zusammensetzung der Restglasphase und der ausgeschiedenen Kristallphasen sowie Kristallphasenanteile können diese Eigenschaften beeinflusst werden. Angestrebt werden hierbei meist eine spezifische Steifigkeit von 30 bis 50 MJ/kg. Die im Stand der Technik bislang bekannten Glaskeramiken des MAS-Systems weisen üblicherweise einen thermischen Ausdehnungskoeffizienten von etwa 2 bis 6x10⁻⁶/K im Temperaturbereich von 30 bis 300°C auf.

MAS-Glaskeramiken sind auch als Substrat für Dünnschicht-Silizium als Basis für aktive Bauelemente in integrierten Schaltungen, wie Dioden oder Dünnfilmtransistoren (TFT), in der Entwicklung. Aus Substrat-gestütztem Dünnschicht-Silizium lassen sich Bauteile für Flachbildschirme (z.B. LCDs) sowie Solarzellen zur Erzeugung von Strom und dergleichen darstellen.

Zurzeit wird überwiegend amorphes Dünnschicht-Silizium (a-Si) auf Substrate aufgebracht. Die für die Prozesse der Abscheidung des amorphen Dünnschicht-Siliziums auf den Substraten notwendigen Temperaturen liegen im Bereich von üblicherweise ca. 450°C. Die Nutzung von polykristallinem Dünnschicht-Silizium (poly-Si) in den entsprechenden Bauteilen würde einige entscheidende Vorteile gegenüber a-Si-Bauteilen mit sich bringen, da das poly-Si eine deutlich höhere Elektronenmobilität aufweist. So könnte die Auflösung und die Reaktionsgeschwindigkeit eines LCDs signifikant erhöht werden. Des Weiteren eröffnen sich dadurch Möglichkeiten, weitere integrierte Schaltungen on-board zu verwirklichen, die im Falle von a-Si-Bauteilen am Rande der LCDs etwa in Form von Extrachips angebracht sind. Poly-Si wird nach dem heutigen Stand der Technik durch Rekristallisation von a-Si auf dem Substrat gewonnen. Prinzipiell wird dieser Vorgang durch eine Erwärmung der Si-Schicht auf Temperaturen verwirklicht, bei denen das a-Si kristallisiert. Man unterscheidet dabei Low-Temperature poly-Si, das durch lokales Erwärmen der Si-Schicht auf 600°C gewonnen wird, sowie High-Temperature poly-Si, das sich bei Prozesstemperaturen von ca. 900°C bildet. Zur Erzeugung solcher poly-Si-Gegenstände wird entweder das gesamte Bauteil entsprechend erhitzt (HT-poly-Si) oder die Temperaturen nur lokal durch die Abrasterung der Fläche (der Oberflächenschicht) mit einem Excimer-Laser erreicht. Das poly-Si derjenigen Bauteile, die nach letzterem Verfahren hergestellt wurden, ist häufig uneinheitlich. So treten dort z.B. sogenannte "Nadelstich-Defekte" auf, die unerwünscht sind. Low-Temperature-poly-Si-Bauteile müssen, um den gleichen Integrationsgrad wie im Falle von High-Temperature poly-Si zu erreichen, sehr lange prozessiert werden, üblicherweise über mehr als 20 Stunden.

Da ein hoher Integrationsgrad der Transistoren mehrere Photo-Lithographische Prozesse zur Voraussetzung hat, muss das poly-Si-Bauteil die Temperungen der Rekristallisationszyklen ohne wesentliche Geometrieveränderung (Schrumpf) überstehen, damit Ausrichtungsfehler der übereinander befindlichen Schichten und eventueller Kontaktstellen untereinander vermieden werden. Üblicherweise beträgt die Schrumpftoleranz nur einen Bruchteil der lateralen Ausdehnung der kleinsten abgebildeten Schaltungs-Einheit; im Vergleich zum gesamten Substrat oftmals nicht mehr als 50 ppm. Um Spannungen zwischen Substrat und Si-Schicht zu vermeiden, muss der thermische Ausdehnungskoeffizient beider Materialien aneinander angepasst bzw. gleich sein. Die bislang einzig für poly-Si-Bauteile verwendbaren Substrate bestehen aus amorphem SiO₂ (Kieselglas) und sind aufwändig und teuer in der Produktion. Des Weiteren beträgt der Unterschied der thermischen Ausdehnungskoeffizienten zwischen dem poly-Si und dem Kieselglas Δα₃₀₋₃₀₀ etwa 3,2 x 10⁻⁷/K.

Hier würden MAS-Glaskeramiken, die auf die gewünschten Eigenschaften maßgeschneidert sind, einerseits technische Verbesserungen bringen und andererseits eine erhebliche Kostenersparnis erlauben.

In diesem Zusammenhang sind etwa die US-A-5,968,857 und die US-B-6,197,429 bekannt geworden.

Sämtliche der vorgenannten Glaskeramiken berücksichtigen allerdings nicht die speziellen Anforderungen, die sich bei der Herstellung derartiger Glaskeramiken in Plattenform mit möglichst geringer Stärke ergeben.

Der Erfindung liegt somit die Aufgabe zu Grunde, eine Glaskeramik anzugeben, die als Substrat für optische und elektronische Bauteile geeignet ist und sich mit hoher Präzision und hoher Homogenität auch in geringer Stärke, selbst bei größeren Flächen, herstellen lässt. Hierbei soll ein möglichst hoher spezifischer E-Modul erreichbar sein, sowie vorteilhafte mechanische Eigenschaften. Möglichst soll der thermische Ausdehnungskoeffizient in geeigneter Weise steuerbar sein, um als Substratmaterial für Polysilizium dienen zu können. Des weiteren ist für bestimmte Anwendungen auch eine Transparenz der Glaskeramik angestrebt.

Schließlich soll ein geeignetes Herstellverfahren für eine derartige Glaskeramik angegeben werden.

Diese Aufgabe wird erfindungsgemäß durch eine Glaskeramik gelöst, die folgende Bestandteile enthält

| | |
|---|---|
| SiO₂ | 35-60 |
| B₂O₃ | >4-10 |
| P₂O₅ | 0-10 |
| Al₂O₃ | 16,5-40 |
| TiO₂ | 1-10 |
| Ta₂O₅ | 0-8 |
| Y₂O₃ | 0-6 |
| ZrO₂ | 1-10 |
| MgO | 6-20 |
| CaO | 0-10 |
| SrO | 0-4 |
| BaO | 0-8 |
| ZnO | 0-4 |
| SnO₂+CeO₂ | 0-4 |
| SO₄²⁻+Cl⁻ | 0-4, |

wobei der Summengehalt an SnO₂, CeO₂, SO₄²⁻ und Cl⁻
Σ(SnO₂, CeO₂, SO₄²⁻, Cl⁻) zwischen 0,01 Gew.-% und 4 Gew.-% liegt.

Die Aufgabe der Erfindung wird auf diese Weise vollkommen gelöst.

Erfindungsgemäß kann nämlich zunächst ein Ausgangsglas der betreffenden Zusammensetzung erschmolzen und geläutert werden und anschließend in einem Floatglasprozess zu Glasplatten mit hoher Oberflächenpräzision und geringsten Dickenschwankungen ausgeformt werden. Dabei sind auch dünne Stärken von unterhalb 2 mm ohne weiteres realisierbar.

Hinsichtlich des Verfahrens wird die Aufgabe der Erfindung durch ein Verfahren zur Herstellung einer Glaskeramik gelöst, bei dem zunächst ein Ausgangsglas erschmolzen wird, das die folgenden Bestandteile (in Gew.-% auf Oxidbasis) enthält:

| | |
|---|---|
| SiO₂ | 35-60 |
| B₂O₃ | >4-10 |
| P₂O₅ | 0-10 |
| Al₂O₃ | 16,5-40 |
| TiO₂ | 1-10 |
| Y₂O₃ | 0-6 |
| ZrO₂ | 1-10 |
| MgO | 6-20 |
| CaO | 0-10 |
| SrO | 0-4 |
| BaO | 0-8 |
| ZnO | 0-4 |
| SnO₂+CeO₂ | 0-4 |
| SO₄⁻⁻+Cl⁻ | 0-4, |

wobei der Summengehalt an SnO₂, CeO₂, SO₄²⁻ und Cl⁻
Σ(SnO₂, CeO₂, SO₄²⁻, Cl⁻) zwischen 0,01 Gew.-% und 4 Gew.-% liegt.

Die erfindungsgemäße Glaskeramik erlaubt eine Formgebung insbesondere im Floatglasverfahren, bevor das Keramisierungsprogramm durchgeführt wird, um das Ausgangsglas in die Glaskeramik umzuwandeln. Es versteht sich jedoch, dass die Erfindung auch mit anderen Formgebungsverfahren, z.B. Ziehverfahren, eingesetzt werden kann.

In bevorzugter Weiterbildung der Erfindung enthält die Glaskeramik folgende Bestandteile (in Gew.-% auf Oxidbasis):

| | |
|---|---|
| SiO₂ | 39-55 |
| B₂O₃ | >4-8 |
| P₂O₅ | 0-6 |
| Al₂O₃ | 16,5-32 |
| TiO₂ | 1 - <7 |
| Ta₂O₅ | 0-5 |
| Y₂O₃ | 0-5 |
| ZrO₂ | 1-6 |
| MgO | >8-20 |
| CaO | 0-6 |
| SrO | 0-2,5 |
| BaO | 0-5 |
| ZnO | 0-2 |
| SnO₂+CeO₂ | 0-4 |
| SO₄²- | 0-2 |
| Cl- | 0-2. |

In den Unteransprüchen sind weitere Merkmale der Erfindung unter Schutz gestellt.

Um einen hohen Elastizitätsmodul bei geringer Dichte zu erreichen, sollte der Aluminiumoxidgehalt mindestens 16,5 Gew.-% betragen. Ferner bewirken Zusätze von Y₂O₃ ebenfalls eine Erhöhung des Elastizitätsmoduls, insbesondere dann, wenn yttriumhaltige Kristallphasen ausgeschieden werden (z.B. Y-Xenotim - YPO₄, Yttriumpyrosilikat - Y₂Si₂O₇ oder Yttropyrochlor - Y₂Ti₂O₇), wobei sich der E-Modul um ca. 2 GPa je Gew.-% Y₂O₃ erhöht.

Ein thermischer Ausdehnungskoeffizient im Temperaturbereich zwischen 30 und 300°C von α_{30...300}<5 x 10⁻⁶/K, bevorzugt α_{30...300}<4 x 10⁻⁶/K, besonders bevorzugt α_{30...300}<3,7 x 10⁻⁶/K wird durch Art und Verhältnisse der ausgeschiedenen Kristallphasen untereinander und zur Restglasphase bestimmt und kann durch das Keramisierungsprogramm, insbesondere Heizrampen, Haltetemperaturen und Kühlrampen beeinflusst werden. Dabei wird insbesondere auf diejenigen Temperaturen erhitzt bzw. dort gehalten, bei denen die Kristallphasen Spinell, Sapphirin und Cordierit (bzw. entsprechende Mischkristalle) ausgeschieden werden. Damit genau diese Kristallphasen bevorzugt ausgeschieden werden, sind die Verhältnisse der Oxide SiO₂, MgO und Al₂O₃ ausschlaggebend. Diese betragen bevorzugt (in Gew.-%):

| | |
|---|---|
| SiO₂/Σ(SiO₂, Al₂O₃, MgO) | 0,48 bis 0,62, |
| | besonders bevorzugt 0,50 bis |
| | 0,60 |
| Al₂O₃/Σ(SiO₂, Al₂O₃, MgO) | 0,185 bis 0,355, |
| | besonders bevorzugt 0,20 bis |
| | 0,25 |
| MgO/Σ(SiO₂, Al₂O₃, MgO) | 0,11 bis 0,21, |
| | besonders bevorzugt 0,16 bis |
| | 0,21. |

Die jeweiligen Kristallphasen-Ausscheidungstemperaturen und die dazugehörigen Haltezeiten können durch an sich bekannte Analyseverfahren (z.B. Differenzialthermoanalyse (DTA) oder Hochtemperaturröntgenbeugung (HT-XRD)) ermittelt werden.

Eine gute Glasstabilität des Ausgangsglases bei den relativ niedrigen SiO₂-Gehalten der erfindungsgemäßen Glaskeramiken kann durch einen Mischerdalkalieffekt unterstützt werden. Hierzu werden bevorzugt MgO, CaO, SrO und BaO in folgendem Verhältnis zugesetzt:

| | |
|---|---|
| MgO/(CaO + SrO + BaO) | >2 bis 10, |
| | weiter bevorzugt >3, besonders |
| | bevorzugt >5. |

Auch B₂O₃, das zu mehr als 4 Gew.-% zugesetzt wird, sowie ZnO zählen zu den Flussmitteln. Das Verhältnis der Erdalkalioxide zusammen mit den Komponenten B₂O₃ und ggf. ZnO bewirkt, dass mindestens eines dieser Flussmittel vollständig (SrO) und die übrigen zumindest teilweise in der Restglasphase der Glaskeramik verbleiben und somit die Restglasphase gegen die Ausscheidung unerwünschter Kristallphasen, z.B. α-Quarz, stabilisieren.

Der Gehalt an ZnO beträgt vorzugsweise maximal 2 Gew.-%, da sich höhere ZnO-Gehalte ggf. im für das Ausgangsglas besonders bevorzugten Formgebungsverfahren, dem Floaten auf einem flüssigen Sn-Bad, negativ auswirken. Es hat sich nämlich gezeigt, dass insbesondere ZnO zur Verdampfung neigt und Glasfehler verursacht bzw. in der Formiergasatmosphäre des Floataggregates reduziert wird und sich mit dem Zinn des Floatbades legiert. Aus demselben Grunde sollte das Ausgangsglas der Glaskeramik möglichst kein Fluorid, PbO, As₂O₃, Sb₂O₃ und MoO₃ enthalten. Bariumoxid, das zwar grundsätzlich enthalten sein kann, wird bevorzugt jedoch wegen seines hohen Beitrages zur Gesamtdichte der Glaskeramik und damit wegen der entsprechenden Absenkung des spezifischen E-Moduls nicht zugesetzt.

Eine hohe Temperaturbeständigkeit der erfindungsgemäßen Glaskeramik von mindestens 800°C, bevorzugt mindestens 850°C und besonders bevorzugt von mindestens 900°C wird in Abhängigkeit von der Zusammensetzung des Ausgangsglases und des Keramisierungsprogrammes erreicht. Diese produktrelevante Größe wird überwiegend von den Kristallphasenanteilen sowie von der Restglasviskosität im genannten Temperaturbereich bestimmt. Die Kristallphasenanteile lassen sich über die Menge an ausgeschiedenen Kristalliten steuern und sind damit in Abhängigkeit vom Keimbildnergehalt. Dabei haben sich Keimbildnergehalte (Σ(P₂O₅, TiO₂, ZrO₂, SnO₂, Ta₂O₅) im Bereich von 0,01 bis 20 Gew.-%, bevorzugt 6 bis 16,5 Gew.-%, besonders bevorzugt von 5 bis 12 Gew.-% als vorteilhaft erwiesen. Dabei sollte der TiO₂-Gehalt 7 Gew.-% nicht übersteigen, da ansonsten die Gefahr besteht, dass während der Keramisierung die Kristallphase Rutil ausgeschieden wird. Diese ist unerwünscht, da sie die Transparenz der Glaskeramik mindert. Andererseits sollte ein TiO₂-Gehalt von 1 Gew.-% nicht unterschritten werden, da ansonsten die Anzahl an Keimen nicht ausreicht, um ein homogenes, feinkristallines Gefüge mit Kristalliten, bevorzugt < 300 nm, zu erreichen, was für die Transparenz notwendig ist. Als Keimbildner kann auch Ta₂O₅ eingesetzt werden, was den Vorteil bietet, selbst in Kombination mit anderen Elementen (z.B. Fe, Zn) nicht färbend zu wirken.

Neben seiner Wirkung als Keimbildner stellt sich SnO₂ als brauchbares und insbesondere floatverträgliches Läutermittel dar, weswegen ein Gehalt an SnO₂ von bis zu 4 Gew.-% möglich ist. Ein weiteres floatverträgliches Läutermittel ist CeO₂, das alternativ oder ergänzend zu SnO₂ verwendet werden kann. Ebenso ist eine Sulfat-Chlorid-Mischläuterung möglich, sofern die Rohstoffe des Glases zum Teil als Sulfate bzw. Chloride eingesetzt werden. Insgesamt liegt somit die Summe von SnO₂, CeO₂, SO₄²⁻, Cl⁻ zwischen 0,01 und 4 Gew.-%. So weit SnO₂ bzw. CeO₂ als Läutermittel verwendet werden, so liegt hierbei der Gesamtgehalt vorzugsweise zwischen 0,1 und 1 Gew.-%, besonders bevorzugt zwischen 0,2 und 0,5 Gew.-%. Sofern Sulfat und Chlorid als Läutermittel eingesetzt werden, so werden Sulfat- bzw. Chloridionen jeweils bis zu 2 Gew.-% zugesetzt.

### Beispiele

In den Tabellen 1 und 2 sind Beispiele 1 bis 7 zusammengefasst (Angaben für die Ausgangsgläser).

Die betreffenden Ausgangsgläser der Glaskeramiken wurden bei Temperaturen von etwa 1600°C erschmolzen (Einlegen von Gemischen der Oxide, Carbonate, Sulfate, Chloride oder Nitrate der Elemente entsprechend der angegebenen Zusammensetzung über einen Zeitraum von ca. 1 h/kg Gemenge) und nach einer Abstehund Läuterzeit von ca. 2 Stunden gegossen. Die Gläser wurden bei Temperaturen von T_{g} + 10 K eine Stunde lang entspannt und langsam mit 60 K/h abgekühlt.

Diese Ausgangsgläser wurden durch eine üblicherweise mehrstufige Temperaturbehandlung in Glaskeramiken umgewandelt.

Bspw. erfolgte beim Beispiel 1 die Keramisierung nach folgendem Temperaturprogramm:

Aufheizen mit 5 K/min auf 770°C, Halten bei 770°C 2 h lang, Aufheizen mit 5K/min auf 865°C, Halten bei 865°C 2 h lang, Abkühlen auf Raumtemperatur.

Als Kristallphasen wurden hierbei analysiert: Cordierit als Hauptphase, sowie TiZrO₄ und Mg-Hochquarz-Mischkristall als Nebenphasen. Für die Glaskeramik wurden folgende Eigenschaften gemessen:

| | |
|---|---|
| Dichte | 2,693 g/cm³ |
| E-Modul | 98 ±3 GPa |
| E/p | 36,4 MJ/kg |
| CTE (30-300) | 4,0 x 10⁻⁶/K. |

Die Keramisierung erfolgte bei den Beispielen 6 und 7 wie folgt:
Aufheizen mit 5K/min auf Keimbildungstemperatur
Halten für 4 h
Aufheizen mit 3 K/h auf Kristallwachstumstemperatur von 900 °C, Halten für 1 h
Kühlen mit 15 K/h (0,25 K/min) auf 850 °C
Kühlen mit 60 K/h (1 K/min) auf 750 °C
Abkühlen auf RT.

Für die Glaskeramik wurden folgende Eigenschaften gemessen:

| | Beispiel 6 | Beispiel 7 |
|---|---|---|
| Dichte | 2,68 g/cm³ | 2,68 g/cm³ |
| E-Modul | 120 ±3 Gpa | 118 ±3 GPa |
| E/p | 44,8 MJ/kg | 44 MJ/kg |

Als Hauptkristallphasen wurden Cordierit und Mg-Hochquarz-Mischkristall festgestellt, als Nebenphase Spinell.

Die übrigen Proben wurden wie folgt keramisiert:
Keimbildung bei Temperaturen um T_{g} + (30 bis 70 K)
Haltezeiten zwischen 60 und 240 min
Kristallwachstum bei Temperaturen der entsprechenden Kristallisationspeaks
Haltezeiten zwischen 30 und 240 min.

Die Heizraten liegen üblicherweise im Bereich von 1 bis 15 K/min, bevorzugt zwischen 3 und 10 K/min.

Die betreffende Haltetemperaturen zur Keimbildung und zum Kristallwachstum können, wie bereits erwähnt, mittels bekannter Verfahren ermittelt werden, z.B. mittels DTA-Kurven.

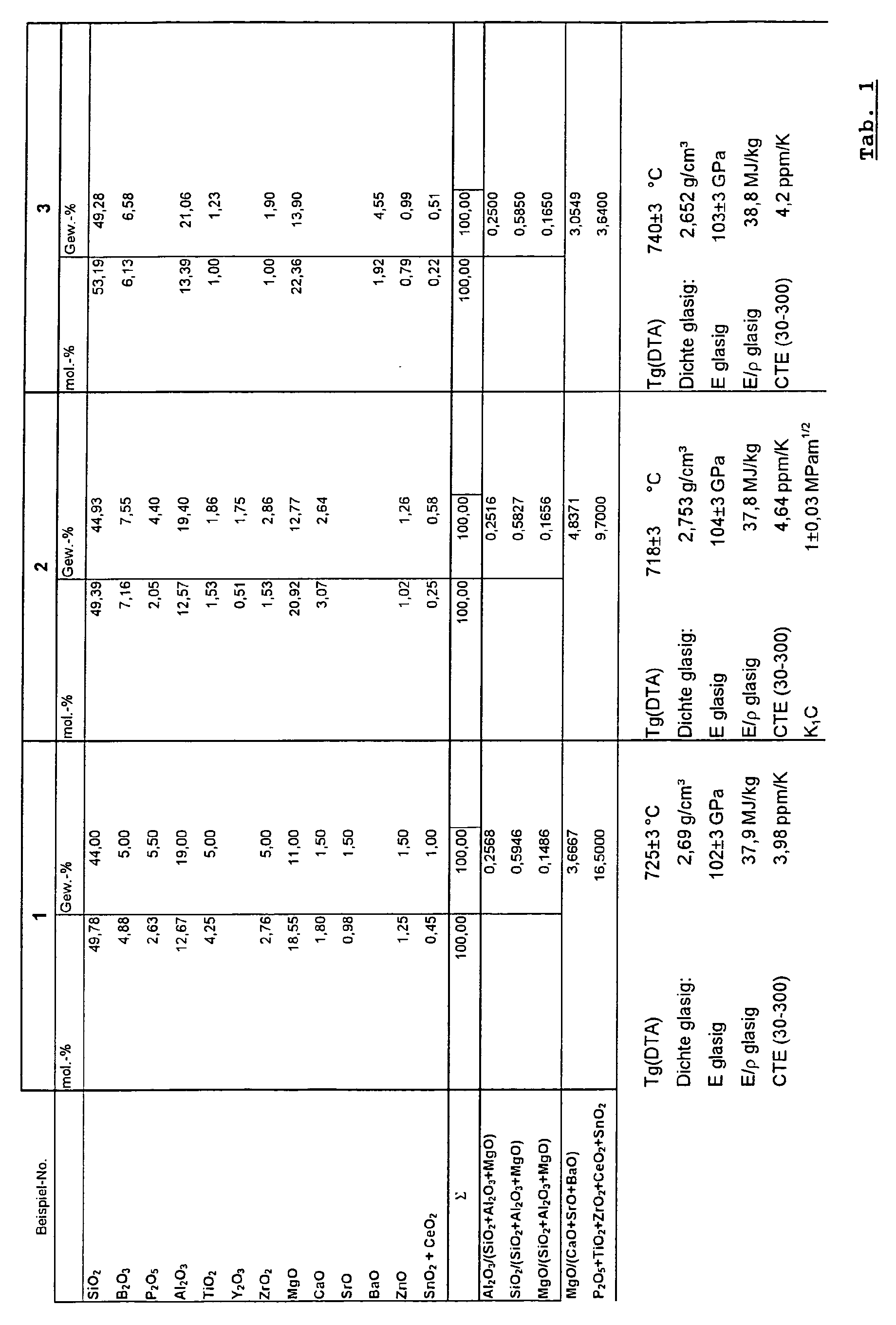

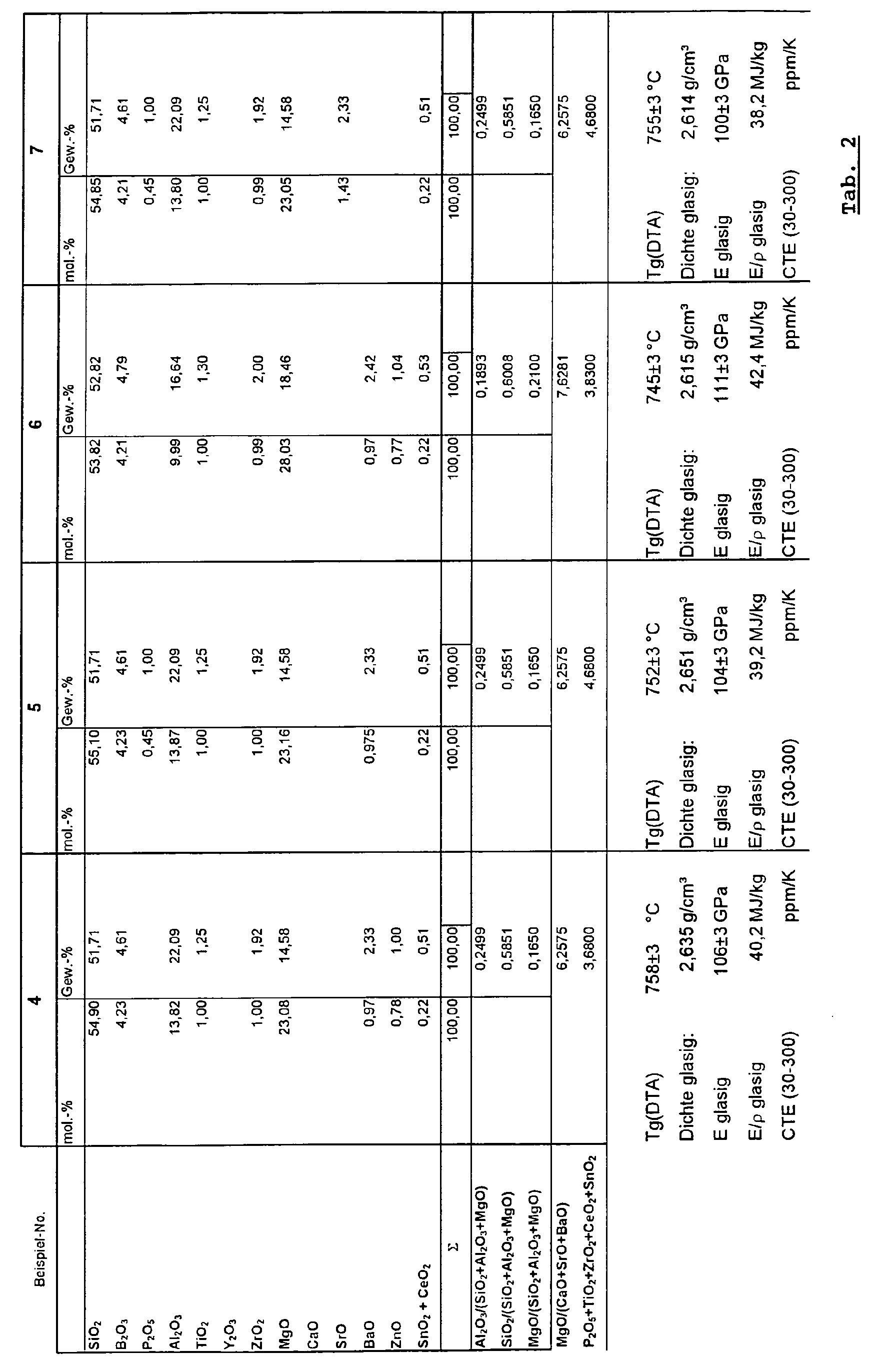

## Patentansprüche

1. Glaskeramik, die folgende Bestandteile (in Gew.-% auf Oxidbasis) enthält:
| | |
|---|---|
| SiO₂ | 35-60 |
| B₂O₃ | >4-10 |
| P₂O₅ | 0-10 |
| Al₂O₃ | 16,5-40 |
| TiO₂ | 1-10 |
| Ta₂O₅ | 0-8 |
| Y₂O₃ | 0-6 |
| ZrO₂ | 1-10 |
| MgO | 6-20 |
| CaO | 0-10 |
| SrO | 0-4 |
| BaO | 0-8 |
| ZnO | 0-4 |
| SnO₂+CeO₂ | 0-4 |
| sO₄²⁻+Cl⁻ | 0-4, |
wobei der Summengehalt an SnO₂, CeO₂, SO₄²⁻ und Cl⁻
Σ( SnO₂, CeO₂, SO₄²⁻, Cl⁻) zwischen 0,01 Gew.-% und 4 Gew.-% liegt.

2. Glaskeramik nach Anspruch 1, die folgende Bestandteile (in Gew.-% auf Oxidbasis) enthält:
| | |
|---|---|
| SiO₂ | 39-55 |
| B₂O₃ | >4-8 |
| P₂O₅ | 0-6 |
| Al₂O₃ | 16,5-32 |
| TiO₂ | 1 - <7 |
| Ta₂O₅ | 0-5 |
| Y₂O₃ | 0-5 |
| ZrO₂ | 1-6 |
| MgO | >8-20 |
| CaO | 0-6 |
| SrO | 0-2,5 |
| BaO | 0-5 |
| ZnO | 0-2 |
| SnO₂+CeO₂ | 0-4 |
| sO₄²⁻ | 0-2 |
| Cl⁻ | 0-2. |

3. Glaskeramik nach Anspruch 1 oder 2, bei der der Summengehalt Σ(P₂O₅, TiO₂, ZrO₂, SnO₂, Ta₂O₅) zwischen 0.01 Gew.-% und 20 Gew.-% ist.

4. Glaskeramik nach Anspruch 3, bei der der Summengehalt Σ(P₂O₅, TiO₂, ZrO₂, CeO₂, SnO₂, Ta₂O₅) zwischen 3 Gew.-% und 16,5 Gew.-% ist.

5. Glaskeramik nach Anspruch 4, bei der der Summengehalt Σ(P₂O₅, TiO₂, ZrO₂, CeO₂, SnO₂, Ta₂O₅) zwischen 5 Gew.-% und 12 Gew.-% ist.

6. Glaskeramik nach einem der vorhergehenden Ansprüche, bei der die Bestandteile SiO₂, Al₂O₃ und MgO in folgendem Verhältnis enthalten sind:
SiO₂/Σ(SiO₂, Al₂O₃, MgO) zwischen 0,48 und 0,62.

7. Glaskeramik nach einem der vorhergehenden Ansprüche, bei der die Bestandteile SiO₂, Al₂O₃ und MgO in folgendem Verhältnis enthalten sind:
SiO₂/Σ(SiO₂, Al₂O₃, MgO) zwischen 0,50 und 0,60.

8. Glaskeramik nach einem der vorhergehenden Ansprüche, bei der die Bestandteile SiO₂, Al₂O₃ und MgO in folgendem Verhältnis enthalten sind:
Al₂O₃/Σ(SiO₂, Al₂O₃, MgO) = 0,185 bis 0,355.

9. Glaskeramik nach einem der vorhergehenden Ansprüche, bei der die Bestandteile SiO₂, Al₂O₃ und MgO in folgendem Verhältnis enthalten sind:
Al₂O₃/Σ(SiO₂, Al₂O₃, MgO) = 0,20 bis 0,25.

10. Glaskeramik nach einem der vorhergehenden Ansprüche, bei der die Bestandteile SiO₂, Al₂O₃ und MgO in folgendem Verhältnis enthalten sind:
MgO/Σ(SiO₂, Al₂O₃, MgO) = 0,11 bis 0,21.

11. Glaskeramik nach einem der vorhergehenden Ansprüche, bei der die Bestandteile SiO₂, Al₂O₃ und MgO in folgendem Verhältnis enthalten sind:
MgO/Σ(SiO₂, Al₂O₃, MgO) = 0,16 bis 0,21.

12. Glaskeramik nach einem der vorhergehenden Ansprüche, bei der die Bestandteile MgO, CaO und SrO in folgendem Verhältnis enthalten sind:
MgO/Σ(CaO, SrO, BaO) >2 bis 10.

13. Glaskeramik nach einem der vorhergehenden Ansprüche, bei der die Bestandteile MgO, CaO und SrO in folgendem Verhältnis vorliegen:
MgO/Σ(CaO, SrO, BaO) >3.

14. Glaskeramik nach einem der vorhergehenden Ansprüche, bei der die Bestandteile MgO, CaO und SrO in folgendem Verhältnis vorliegen:
MgO/Σ(CaO, SrO, BaO) >5.

15. Glaskeramik nach einem der vorhergehenden Ansprüche, die im Wesentlichen keine Alkalimetalloxide enthält.

16. Glaskeramik nach einem der vorhergehenden Ansprüche, deren Summengehalt an Alkalimetalloxiden beträgt:
Σ(Li₂O, Na₂O, K₂O, Rb₂O, Cs₂O) ≤ 0,5 Gew.-%.

17. Glaskeramik nach einem der vorhergehenden Ansprüche, die außer zufälligen Verunreinigungen kein Fe₂O₃, Cr₂O₃, Co₂O₃, CuO, NiO, V₂O₅, Ag₂O, MoO₃ enthält.

18. Glaskeramik nach einem der vorhergehenden Ansprüche, die außer zufälligen Verunreinigungen kein Fluorid, PbO, As₂O₃ und Sb₂O₃ enthält.

19. Glaskeramik nach einem der vorhergehenden Ansprüche, deren Summengehalt an SnO₂, CeO₂ beträgt:
Σ(SnO₂, CeO₂) = 0,1 bis 1,0 Gew.-%.

20. Glaskeramik nach einem der vorhergehenden Ansprüche, die im Wesentlichen kein Bariumoxid enthält.

21. Glaskeramik nach einem der vorhergehenden Ansprüche, die durch thermische Behandlung eines Ausgangsglases keramisiert ist und als Hauptkristallphasen Spinell und/oder Sapphirin und/oder Cordierit und/oder Mischkristalle hiervon enthält.

22. Glaskeramik nach einem der vorhergehenden Ansprüche, die durch thermische Behandlung eines Ausgangsglases keramisiert ist und eine yttriumhaltige Kristallphase enthält.

23. Glaskeramik nach einem der vorhergehenden Ansprüche, die einen spezifischen Elastizitätsmodul aufweist, der größer als 30 MJ/kg ist, bevorzugt größer als 35 MJ/kg, besonders bevorzugt größer als 42 MJ/kg ist.

24. Glaskeramik nach einem der vorhergehenden Ansprüche, die einen Elastizitätsmodul von mehr als 100 GPa, vorzugsweise von mehr als 110 GPa aufweist.

25. Glaskeramik nach einem der vorhergehenden Ansprüche, die im Temperaturbereich von 30 bis 300 °C einen thermischen Ausdehnungskoeffizienten (CTE) aufweist, der maximal 6 x 10⁻⁶/K beträgt, vorzugsweise im Bereich von 2 bis 6 x 10⁻ ⁶/K liegt.

26. Glaskeramik nach einem der vorhergehenden Ansprüche, die im Temperaturbereich von 30 bis 300 °C einen thermischen Ausdehnungskoeffizienten (CTE) aufweist, der ≤ 4 x 10⁻⁶/K ist, vorzugsweise ≤ 3,7 x 10⁻⁶/K ist.

27. Glaskeramik nach einem der vorhergehenden Ansprüche, die bis mindestens 700 °C, vorzugsweise bis mindestens 800 °C temperaturbeständig ist.

28. Glaskeramik nach einem der vorhergehenden Ansprüche mit einer erdalkalioxidhaltigen Restglasphase.

29. Glaskeramik nach einem der vorhergehenden Ansprüche, die optisch transparent ist.

30. Glaskeramik nach einem der vorhergehenden Ansprüche, deren Ausgangsglas in einem Floatverfahren geformt ist.

31. Halbleitersubstrat bestehend aus einer Glaskeramik nach einem der vorhergehenden Ansprüche.

32. Festplattenspeichersubstrat bestehend aus einer Glaskeramik nach einem der Ansprüche 1 bis 30.

33. Optische Anzeige mit einem transparenten Substrat bestehend aus einer Glaskeramik nach einem der Ansprüche 1 bis 30.

34. Halbleiterbauelement, insbesondere Diode oder Dünnfilmtransistor, mit mindestens einem Substrat bestehend aus einer Glaskeramik nach einem der Ansprüche 1 bis 30.

35. Flachbildschirm mit mindestens einem Substrat bestehend aus einer Gaskeramik nach einem der Ansprüche 1 bis 30.

36. Lichtaktives Halbleiterbauelement, insbesondere Solarzelle, mit einem Substrat bestehend aus einer Glaskeramik nach einem der Ansprüche 1 bis 30.

37. Verfahren zur Herstellung einer Glaskeramik, bei dem zunächst ein Ausgangsglas erschmolzen wird, das die folgenden Bestandteile (in Gew.-% auf Oxidbasis) enthält:
| | |
|---|---|
| SiO₂ | 35-60 |
| B₂O₃ | >4-10 |
| P₂O₅ | 0-10 |
| Al₂O₃ | 16,5-40 |
| TiO₂ | 1-10 |
| Y₂O₃ | 0-6 |
| ZrO₂ | 1-10 |
| MgO | 6-20 |
| CaO | 0-10 |
| SrO | 0-4 |
| BaO | 0-8 |
| ZnO | 0-4 |
| SnO₂+CeO₂ | 0-4 |
| SO₄⁻⁻+Cl⁻ | 0-4, |
wobei der Summengehalt an SnO₂, CeO₂, SO₄⁻⁻ und Cl⁻
Σ( SnO₂, CeO₂, SO₄⁻⁻, Cl⁻) zwischen 0,01 Gew.-% und 4 Gew.-% liegt,
und wobei das Ausgangsglas anschließend einer Keramisierung unterzogen wird.

38. Verfahren nach Anspruch 37, bei dem das Ausgangsglas erschmolzen und geläutert wird, anschließend im Floatglasverfahren zu Platten ausgeformt wird und anschließend einer Keramisierung unterzogen wird.

39. Verfahren nach Anspruch 37 oder 38, bei dem die Temperaturbehandlung bei der Keramisierung so gesteuert wird, dass sich die Hauptkristallphasen Spinell und/oder Sapphirin und/oder Cordierit oder Mischkristalle hiervon ausbilden.

40. Verfahren nach einem der Ansprüche 37 bis 39, bei dem die Temperaturbehandlung bei der Keramisierung so gesteuert wird, dass sich yttriumhaltige Kristallphasen ausbilden.
